# EUROPEAN PATENT SPECIFICATION

(11) **EP 0 325 399 B1**
(45) Date of publication and mention of the grant of the patent: **17.08.1994**
(21) Application number: 89300383.0
(22) Date of filing: 17.01.1989
(51) Int. Cl.: G11B 23/00, G11B 7/24

(54) **Information recording media**
Datenaufzeichnungsträger
Support d'enregistrement d'information

(30) Priority: 19.01.1988 JP 4883/88
(43) Date of publication of application: 26.07.1989
(73) Proprietor: MITSUI PETROCHEMICAL INDUSTRIES, LTD., Tokyo 100 (JP)
(72) Inventor: Omae, Fujio c/o Mitsui Petrochemical Ind. Ltd., Chiyoda-ku Tokyo (JP)
(74) Representative: Cresswell, Thomas Anthony

(56) References cited:
- GB-A- 2 082 372
- GB-A- 2 161 977
- US-A- 4 562 505
- PATENT ABSTRACTS OF JAPAN vol. 11, no. 331 (P-630)(2778) 29 October 1987,& JP-A-62 114180 (SONY CORP.) 25 May 1987,

## Description

This invention relates to information recording media which may, for example, be used as optical discs, particularly information recording media which are set by a magnetic clamping system.

Information recording media for storing and reading information by irradiating light such as a laser beam on a recording layer thereof are known (see GB-A-2 161 977) wherein a magnetic clamping hub is fitted into a center hole of a plastic single disc substrate having the recording layer on one side of or inside said disc substrate so that said information recording media are clamped by the magnetic clamping system on a disc drive.

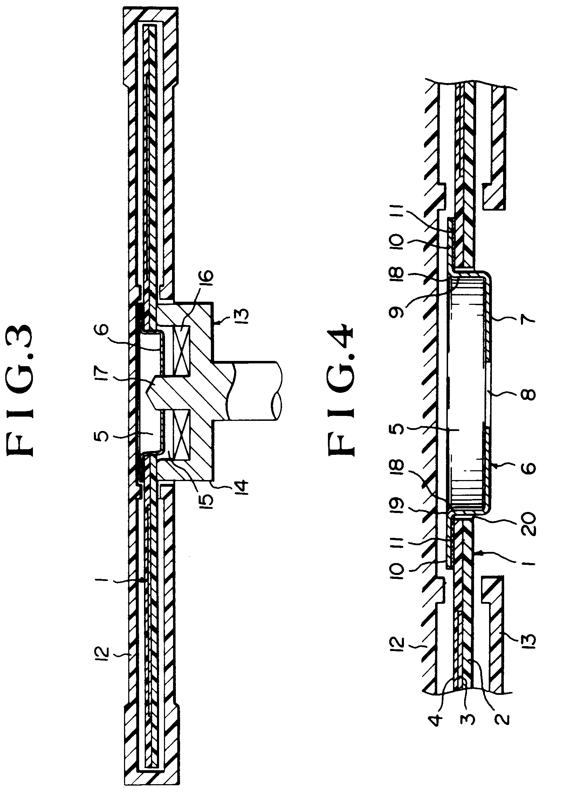

Fig. 3 of the accompanying drawings is a cross-sectional view showing a conventional information recording medium clamped by the magnetic clamping system, and Fig. 4 is a partially enlarged view thereof. In the figures, reference numeral 1 designates an information recording medium, wherein a recording layer 3 is formed on one side of a disc substrate 2, the top surface of said recording layer is covered with a protective layer 4, and a magnetic clamping hub 6 of the dish-like shape is fitted into a center hole 5 of said disc substrate. The magnetic clamping hub 6 is formed by pressing a magnetic metal plate into a dish-like form, and the thus dished hub has a spindle hole 8 at the center of said hub. A cylindrical upstand portion 9 of the hub 6 is inserted into the center hole 5 of the disc substrate 2, and the upper flange portion 10 of the hub 6 is fixed by means of an adhesive 11 to the inner peripheral surface of the protective layer 4 covering the recording layer 3 and the disc substrate 2.

The above-mentioned information recording medium 1 is contained in a cartridge 12, and the cartridge 12 is placed on a disc drive 13. The disc drive 13 is so designed that the magnetic clamping hub 6 of the information recording medium 1 is inserted into a clamping area 15 formed in a turn table 14, the inserted hub 6 is clamped by means of a magnet 16, and a spindle 17 projecting at the center portion of the turn table 14 is inserted into the spindle hole 8 of the magnetic clamping hub 6, whereby the information recording medium 1 is positioned. When the turn table 14 rotates in this state, the information recording medium 1 rotates, and the recording layer 3 is irradiated through windows (not shown) provided at the lower side of the cartridge 12 with laser beam or the like, thereby storing or reading information.

In such a conventional information recording medium as described above, however, because the magnetic clamping hub 6 is stamp pressed into a simple dish-like shape, the radius of curvature of corner portion 18 formed between upstand portion 9 and upper flange portion 10 is liable to vary irregularly. When an upstand portion 9 having an outer diameter practically equal to the inner diameter of the center hole 5 aligned therewith, if the radius of curvature of the corner portion 18 is large, the corner portion 18 interferes with an edge portion of the information recording medium 1 and the gap between the upper flange portion 10 and the protective layer 4 becomes excessively large, and there is a problem that the upper flange portion 10 and the protective layer 4 may not be favourably bonded to each other. In order to inhibit such interference of the corner portion 18 with the edge portion of 19, the space between the upstand portion 9 and the disc substrate 2 must be made large. However, if this is done, there is the problem that a coaxial relationship between the disc substrate 2 and the magnetic clamping hub 6 cannot be maintained.

Such a conventional information recording medium having all the features in the preamble of Claim 1 is disclosed in GB-A-2 161 977.

This invention seeks to solve these problems and to provide information recording media in which a disc substrate and a magnetic clamping hub are attached satisfactorily to each other while maintaining a coaxial relationship between the disc substrate and the magnetic clamping hub.

The information recording medium of the present invention comprising a disc substrate having at least laminated thereon a recording layer and having a central hole, and a magnetic clamping hub fitted into said central hole, said magnetic clamping hub having a spindle hole at the center of a base portion thereof, a cylindrical first upstand portion rising from the outer periphery of the base portion, an upper flange portion extending in a plane parallel to the plane of the disc substrate from the outer periphery of the upper end of the first upstand portion and attached to an inner peripheral surface of the disc substrate, characterised in that the bottom surface of the concave portion at the junction of the first upstand portion and the upper flange portion extends above the plane of the bottom surface of the upper flange portion in order to define a cavity between the concave portion and the disc substrate.

Preferably the first upstand portion rises from the outer periphery of the base portion in a direction almost at right angles to the base portion and the upper flange portion extends in a direction almost at right angles to the first upstand portion and is bonded to an inner peripheral surface of the recording layer or a protective layer coated on the recording layer.

In the information recording medium of the present invention, it is desirable that the magnetic clamping hub has a second upstand portion rising the from the inner periphery of the base portion, i.e. around the spindle hole into which the spindle of a disc drive is inserted.

In the present invention, the information recording medium is intended to include all media which record information on a recording layer thereof, such as optical discs and flexible optical discs. Further, the magnetic clamping hub used in the present invention includes all the hubs formed from magnetic materials, for example, from magnetic metals and plastics blended with magnetic materials.

In the information recording medium of the present invention, because a concave portion is formed at a corner portion of the upper flange and upstand portions of the magnetic clamping hub and above the bottom surface of the upper flange portion, no interference of the edge portion of the disc substrate with the corner portion occurs. On that account, even when the corner portion of the magnetic clamping hub irregularly varies, the disc substrate and the magnetic clamping hub can be maintained in a coaxial relationship by making a small gap between the disc substrate and the magnetic clamping hub and, at the same time, the adhesion between the information recording medium and the magnetic clamping hub is improved by filling the concave portion with an adhesive.

When a magnetic clamping hub having a guide wall, or second upstand portion, around the spindle hole thereof is used, the disc substrate can be maintained perpendicular to the spindle of the disc drive, because surface deflection of the disc substrate is inhibited when the disc substrate is mounted on the disc drive or the information recording medium rotates on the turn table.

### EMBODIMENT OF THE INVENTION

The present invention is illustrated below with reference to an embodiment shown in the accompanying drawings.
Fig. 1 is a cross-sectional view of an embodiment of the present invention,
Fig. 2 is a cross-sectional view of a magnetic clamping hub,
Fig. 3 is a cross-sectional view showing a conventional information recording medium clamped by a magnetic clamping system,
Fig. 4 is a partially enlarged view of the conventional information recording medium.

In the figures, the same reference numeral designates the same or corresponding portion, and reference numeral 1 designates an information recording medium, reference numeral 2 designates a disc substrate, reference numeral 3 designates a recording layer, reference numeral 4 designates a protective layer, reference numeral 5 designates a center hole, reference numerals 6 and 6a designate a magnetic clamping hub, reference numeral 7 designates a base portion, reference numeral 8 designates a spindle hole, reference numeral 9 designates an first upstand portion, reference numeral 10 designates an upper flange portion, reference numeral 11 designates an adhesive, reference numeral 12 designates a cartridge, reference numeral 13 designates a disc drive, reference numeral 18 designates a corner portion, reference numeral 19 designates an edge portion, reference numeral 21 designates a concave portion, and reference numeral 22 designates a second upstand portion.

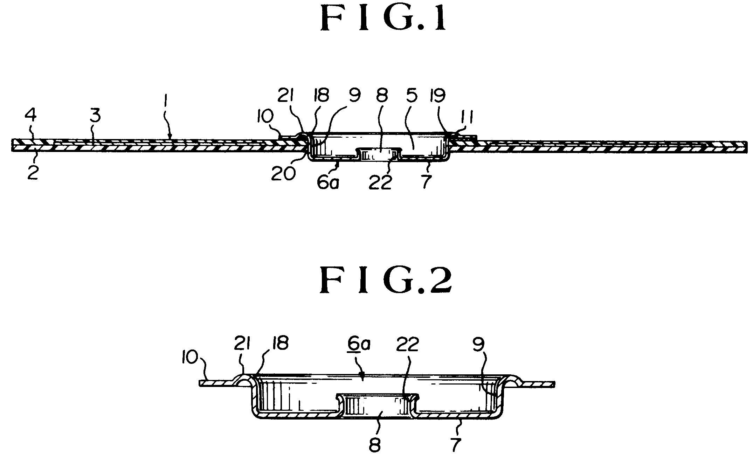

As Shown in Fig. 1, the information recording medium 1 of the present embodiment comprises a transparent plastic disc substrate 2 having on one side thereof a recording layer 3, the surface of said recording layer 3 being covered with a protective layer 4. There may be reflective layer (not shown) between the recording layer 3 and the protective layer 4. Such information recording medium 1 has at the center thereof a center hole 5 into which a magnetic clamping hub 6a is fitted.

The magnetic clamping hub 6a is formed by pressing a circular magnetic metal plate into a dish-like shape, and has a cylindrical first upstand portion 9 and an upper flange portion 10, wherein a concave portion 21 is formed at the side of a corner portion 18 formed between the cylindrical first upstand portion 9 and the upper flange portion 10. At the periphery of a spindle hole 8 of the magnetic clamping hub 6a, a cylindrical second upstand portion rises from a base portion 7 of said hub 6a and is engaged with a spindle 17.

Preferably the first upstand portion 9 is raised from an outer periphery of the base portion 7 in a direction almost at right angles to the base portion 7, and the upper flange portion 10 extends from an outer periphery of the upper end of the first upstand portion 9 in a direction almost at right angles to the upstand portion. The upper flange portion 10 is bonded with an adhesive 11 to the inner peripheral surface of the protective layer 4 coated on the disc substrate 2. When no protective layer is coated on the surface of the disc substrate 2, the upper flange portion 10 is bonded directly to the inner peripheral surface of the disc substrate 2.

Further, the upper flange portion 10 may be attached to the protective layer 4 or the disc substrate 2 without adhesive 11, for example by caulking.

At the corner portion 18 of the first upstand portion 9 and the upper frange portion 10, the concave portion 21 is formed so that it caves in above the bottom surface of the upper flange portion 10.

The information recording medium 1 thus composed is used in the same way as the conventional ones. In this information recording medium 1, however, because the concave portion 21 is formed at the corner portion 18 of the magnetic clamping hub 6a, irregularity in bending radius caused by the formation of the corner portion 18 is absorbed by the concave portion 21 and the edge portion 19 of the disc substrate 2 does not interfere with the corner portion 18. On that account, the disc substrate 2 can be firmly attached to the upstand portion 9 because the gap therebetween is made small. Thus, the center of the disc substrate 2 agrees with that of the magnetic clamping hub 6a, retaining a highly assured coaxial state between said disc substrate and said clamping hub. Furthermore, since the concave portion 21 is filled with the adhesive 11, a high adhesive strength is attained.

When the spindle 17 is inserted into the spindle hole 8, said spindle engages with the second upstand portion 22 and hence surface deflection is inhibited when the information recording medium 1 is placed on the disc drive 13 or when the disc substrate rotates on the turn table, maintaining a high flatness.

Having described the present invention with reference to a stamping pressed product of a magnetic metal as the magnetic clamping hub used in this embodiment, the magnetic clamping hub used in the invention may include injection-molded products of other molded products of plastics blended with magnetic materials.

## Claims

1. An information recording medium (1) comprising a disc substrate (2) having at least laminated thereon a recording layer (3) and having a central hole (5), and a magnetic clamping hub (6a) fitted into said central hole (5), said magnetic clamping hub (6a) having a spindle hole (8) at the center of a base portion (7) thereof, a cylindrical first upstand portion (9) rising from the outer periphery of the base portion (7), an upper flange portion (10) extending in a plane parallel to the plane of the disc substrate (2) from the outer periphery of the upper end of the first upstand portion (9) and attached to an inner peripheral surface of the disc substrate (2), characterised in that the bottom surface of a concave portion (21) at the junction of the first upstand portion (9) and the upper flange portion (10) extends above the plane of the bottom surface of the upper flange portion (10) in order to define a cavity between the concave portion (21) and the disc substrate (2).

2. A medium according to claim 1 wherein said first upstand portion (9) rises in a direction almost at right angles to the base portion (7) and the said upper flange portion (10) extends in a direction almost at right angles to the first upstand portion (9) and is bonded to an inner peripheral surface of the recording layer (3) or a protective layer (4) coated on the recording layer (3).

3. A medium according to claim 1 or 2 wherein the magnetic clamping hub (6a) has a second upstand portion (22 - Fig. 2) rising from the inner periphery of the base portion (7).

4. A medium according to any one of the preceding claims wherein the disc substrate (2) is an optical disc substrate.

## Patentansprüche

1. Datenaufzeichnungsmedium (1) mit einer Trägerscheibe (2), auf die eine Aufzeichnungsschicht (3) zumindest auflaminiert ist und die ein Mittelloch (5) hat, und einer in das Mittelloch (5) eingepaßten magnetischen Klemmnabe (6a), wobei die magnetische Klemmnabe (6a) in der Mitte eines Basisabschnitts (7) ein Achszapfen-Loch (8) aufweist, einen zylindrischen ersten aufgerichteten Abschnitt (9), der vom äußeren Umfang des Basisabschnitts (7) ansteigt, einen oberen Flanschabschnitt (10), der sich in einer Ebene parallel zur Ebene der Trägerscheibe (2) vom äußeren Umfang des oberen Endes des ersten aufgerichteten Abschnitts (9) erstreckt und mit einer Oberfläche am inneren Umfang der Trägerscheibe (2) verbunden ist,
dadurch gekennzeichnet, daß die untere Oberfläche eines konkaven Abschnitts (21) an der Verbindung des ersten aufgerichteten Abschnitts (9) und des oberen Flanschabschnitts (10) über der Ebene der unteren Oberfläche des oberen Flanschabschnitts (10) verläuft und so einen Hohlraum zwischen dem konkaven Abschnitt (21) und der Trägerscheibe (2) festlegt.

2. Medium nach Anspruch 1, bei dem der erste aufgerichtete Abschnitt (9) in eine zum Basisabschnitt (7) im wesentlichen rechtwinklige Richtung ansteigt und der obere Flanschabschnitt (10) in eine zum ersten aufgerichteten Abschnitt (9) im wesentlichen rechtwinklige Richtung verläuft und mit einer Oberfläche am inneren Umfang der Aufzeichnungsschicht (3) oder einer auf die Aufzeichnungsschicht (3) aufgetragenen Schutzschicht (4) fest verbunden ist.

3. Medium nach Anspruch 1 oder 2, bei dem die magnetische Klemmnabe (6a) einen zweiten aufgerichteten Abschnitt (22 - Fig. 2) hat, der von dem inneren Umfang des Basisabschnitts (7) ansteigt.

4. Medium nach einem der vorhergehenden Ansprüche, bei dem die Trägerscheibe (2) eine optische Trägerscheibe ist.

## Revendications

1. Support (1) d'enregistrement d'information, qui comprend un disque substrat (2) sur lequel est stratifiée au moins une couche d'enregistrement (3) et qui présente un trou central (5), et un moyeu (6a) de serrage magnétique emboîté dans ledit trou central (5), ledit moyeu (6a) de serrage magnétique ayant un trou de broche (8) au centre de sa partie de base (7), une première partie cylindrique verticale (9) qui monte de la périphérie extérieure de la partie de base (7), une partie (10) formant rebord supérieur qui s'étend dans un plan parallèle au plan du disque substrat (2) depuis la périphérie extérieure de l'extrémité supérieure de la première partie verticale (9) et qui est fixée à une surface périphérique intérieure du disque substrat (2), **caractérisé** en ce que la surface de fond d'une partie concave (21) située au niveau de la jonction entre la première partie verticale (9) et la partie (10) formant rebord supérieur s'étend au-dessus du plan de la surface de fond de la partie (10) formant rebord supérieur afin de définir une cavité entre la partie concave (21) et le disque substrat (2).

2. Support selon la revendication 1, dans lequel ladite première partie verticale (9) s'élève suivant une direction presque à angle droit par rapport à la partie de base (7) et ladite partie (10) formant rebord supérieur s'étend suivant une direction presque à angle droit par rapport à la première partie verticale (9) et est fixée à une surface périphérique interieure de la couche d'enregistrement (3) ou d'une couche de protection (4) qui recouvre la couche d'enregistrement (3).

3. Support selon la revendication 1 ou 2, dans lequel le moyeu (6a) de serrage magnétique présente une seconde partie verticale (22-fig.2) qui s'élève de la périphérie intérieure de la partie de base (7).

4. Support selon l'une quelconque des précédentes revendications, dans lequel le disque substrat (2) est un disque substrat optique.
